# EUROPEAN PATENT SPECIFICATION

(11) **EP 1 745 967 B1**
(45) Date of publication and mention of the grant of the patent: **29.09.2010**
(21) Application number: 06253796.4
(22) Date of filing: 20.07.2006
(51) Int. Cl.: B60K 6/46, B60L 11/18, H02J 7/34

(54) **Vehicles**
Fahrzeuge
Véhicules

(30) Priority: 21.07.2005 JP 2005211493
(43) Date of publication of application: 24.01.2007
(73) Proprietor: Hitachi, Ltd., Tokyo 100-8280 (JP)
(72) Inventor: Miyauchi, Tsutomu c/o Hitachi Ltd., IP Group, Tokyo 100-8220 (JP); Shimada, Motomi c/o Hitachi Ltd., IP Group, Tokyo 100-8220 (JP); Toyota, Eiichi c/o Hitachi Ltd., IP Group, Tokyo 100-8220 (JP)
(74) Representative: Paget, Hugh Charles Edward

(56) References cited:
- EP-A2- 1 055 545
- US-A1- 2002 174 798
- US-A1- 2005 119 806
- US-B1- 6 223 106

## Description

### BACKGROUND OF THE INVENTION

### Field of the Invention

The present invention relates to, for example, a series of vehicles composed of at least two or more vehicles which are mounted with an energy storage device such as an electric power storage device, and with a electric power generating device such as a diesel engine generator.

### Description of the Related Art

Conventionally, there is known a hybrid vehicle in which an electric power storage device such as a battery and a capacitor in addition to an engine generator are mounted so as to supply electric power to an electric motor. In a train formed by connecting this kind of plurality of vehicles, there is known a train in which the number of revolutions of the plurality of engines arranged to dispersedly share and retain the power is individually controlled so as to minimize the fuel consumption in accordance with the load required for the train, and in which in the case of insufficient engine output, the insufficient energy is replenished from the electric power storage device (see, for example, Japanese Patent Laid-Open No. 8-198102).

However, in the train disclosed in the above described patent reference 1, when the engine output becomes insufficient during operation, such as in hill climbing, the insufficient energy is arranged to be replenished from the electric power storage device, and the deterioration caused by the charge and discharge current to and from the electric power storage device is not taken into account. In such electric power storage device, the smaller charge and discharge current to and from the storage device causes less energy loss. On the contrary, the steeper rise of the charge and discharge current to and from the storage device causes more energy loss. This energy loss is turned to heat, and the heat as it is leads to a temperature rise in the electric power storage device, which causes the property of inner materials of the electric power storage device to be changed. As a result, there arises problems that the maximum electric storage amount of the electric power storage device is reduced, and that the electric power storage rate is lowered.

Further, the period of braking the train is a good opportunity to make an electric motor generate braking force by the regeneration from the electric motor to the electric power storage device, and to make the electric power storage device charged by the regeneration. However, when the storage capacity of the electric power storage device is fully occupied due to overcharging by the regeneration, the regeneration is not expected to be effectively performed any more. For this reason, it is necessary to apply a pneumatic brake to an axle or a wheel connected to the electric motor. However, the braking operation by the pneumatic brake entails friction against the axle or the wheel, which results in a problem that it takes labor to perform the maintenance and the parts replacement of the train, because of the wear of brake shoes, and the like.

Accordingly, it is an object of the present invention to provide vehicles capable of avoiding the steep charge and discharge current flowing into and from the electric power storage device, of extending the life of the electric power storage device, and of saving the labor required for the maintenance and the parts replacement of the train.

US-A-2002/0174798 describes a hybrid energy locomotive system having a first vehicle having a diesel engine driving an alternator/rectifier and an energy tender vehicle having an energy capture and storage system which receives electrical power generated in dynamic braking operation and may also receive energy derived from the diesel engine. This stored energy may be supplied to drive the traction motors. In one embodiment described, there is a third vehicle for charging the energy tender vehicle, having a second diesel engine and an alternator/rectifier. It is stated that the second diesel engine runs at a constant speed to provide a constant charging source for the energy tender vehicle.

US-B-6223106 describes a control system for a hybrid vehicle in which the control system controls the motor/generator to keep the charging and discharging current of the electrical energy storage device at or below a limiting value determined depending on the amount of energy stored in the storage device and the temperature thereof.

### SUMMARY OF THE INVENTION

In order to solve the above described problems, and to achieve the object according to the present invention, there is provided a series of vehicles as set out in claim 1.

Preferably the train control device is adapted to detect the driving command from the vehicle cab and the output power of the electric power generating devices in response to the driving command, and to determine the number of the electric power generating devices to be started among the plurality of electric power generating devices on the basis of the operating state based on the driving command and of the fuel consumption rate of the plurality of electric power generating devices.

Preferably the train control device is adapted to store a history of relationship between the temperature of the electric power storage device and the first threshold value or the second threshold value.

Preferably the train control device is adapted to store the history in which deterioration due to the total use time of the electric power storage device is taken into account.

The train control device is preferably adapted to update the relationship between the temperature of the electric power storage device and the first threshold value or the second threshold value periodically or at an arbitrary timing.

According to the present invention, it is possible to avoid any steep charge and discharge into and from the electric power storage device and to thereby prevent any occurrence of energy loss. It is also possible to extend the life of the electric power storage device by keeping the temperature of the electric power storage device at a suitable level.

Further, according to the present invention, it is possible to save the labor required for the maintenance and the parts replacement of the train.

### BRIEF DESCRIPTION OF THE DRAWINGS

FIG. 1 shows a schematic constitution of a train according to an embodiment of the present invention;
FIG. 2 is a figure showing relationships between a power control notch and the number of revolutions, output, and fuel consumption rate of a electric power generating device;
FIG. 3 is a figure showing numerical examples of the power control notch and the number of revolutions, output power, and fuel consumption rate of the electric power generating device;
FIG. 4 is a flow chart showing an operation;
FIG. 5 is a figure showing relationships between a vehicle cab command, an operating state based on the command, a control command of an electric power storage device, and a control command of the electric power generating device;
FIG. 6 is a time chart showing the operation, in which FIG. 6A shows an operating state, FIG. 6B shows an electric storage capacity in use range, FIG. 6C shows charge and discharge current of the electric power storage device, and FIG. 6D shows engine operation patterns; and
FIG. 7 is a figure showing a relationship between a temperature of the electric power storage device, and a first threshold value and a second threshold value which are start/stop conditions of the electric power generating device.

### DETAILED DESCRIPTION OF THE PREFERRED EMBODIMENTS

In the following, embodiments according to the present invention will be described appropriately referring to the drawings.

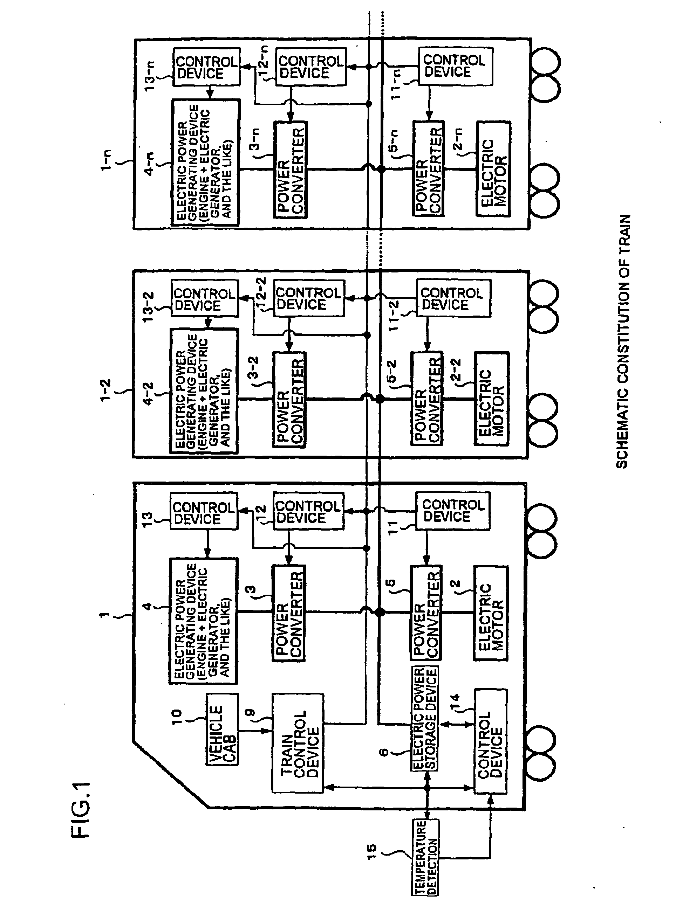

FIG. 1 is a schematic constitution of a train according an embodiment of the present invention.

In this figure, there is shown a train composed of plurality of vehicles 1, 1-2, ..., 1-n, in which electric motors 2, 2-2, and 2-n are mounted in three vehicles 1, 1-2, and 1-n. The plurality of electric motors 2, 2-2, and 2-n rotate axles and wheels which are respectively connected to each of the plurality of electric motors, thereby enabling the train as a whole to be driven. Note that the vehicles mounted with the electric motors 2, 2-2, and 2-n are not limited to the three vehicles, and that the electric motor 2 may not be mounted in the head vehicle 1 mounted with a vehicle cab 10. Note that the vehicles which are not mounted with the electric motors 2, 2-2, and 2-n have only axles and wheels which are driven by the vehicles mounted with the electric motors 2, 2-2, and 2-n.

As the electric motors 2, 2-2, and 2-n, three phase AC motors (induction motors or synchronous motors) are commonly used. In order to supply electric power to the electric motors 2, 2-2, and 2-n, DC power of an electric power storage device 6 is usually converted to AC by power converters 5, 5-2, and 5-n, and the resultant AC power is supplied to the electric motors 2, 2-2, and 2-n. Further, not only electric power from the electric power storage device 6 but also electric power from electric power generating devices 4, 4-2, and 4-n are supplied to the power converters 5, 5-2, and 5-n via power converters 3, 3-2, and 3-n.

The electric power generating devices 4, 4-2, and 4-n are respectively constituted by combining a power generator such as a diesel engine (hereinafter, abbreviated as engine) with an electric generator. The engine can be made into a reverse jet state by controlling its exhaust to thereby operate as an exhaust brake. The electric power generating devices 4, 4-2, and 4-n are not limited to the combination of the diesel engine and the electric generator, and for example, fuel cells may also be adopted as the electric power generating devices. Further, control devices 13, 13-2, and 13-n which respectively control the electric power generating devices 4, 4-2, and 4-n, preferably have a function to monitor the fuel consumption amount and the residual fuel amount of the engine.

The electric power storage device 6 is an electric power storage device which is constituted by a secondary battery, such as a nickel-cadmium battery, a lithium ion battery, and a lead battery, and which can be charged and discharged. A control device 14 which controls the electric power storage device 6 has, for example, a function to grasp the electric storage amount of the electric power storage device 6, by detecting and integrating the charge and discharge current of the electric power storage device 6.

A temperature detecting section 15 is means to detect temperature at the time when the electric power storage device 6 is used.

A train control device 9 receives a driver' s command from the vehicle cab 10, and controls the control devices 13, 13-2, and 13-n of the electric power generating device 4, 4-2, and 4-n, control devices 12, 12-2, 12-n of the power converters 3, 3-2, 3-n, control devices 11, 11-2, 11-n of the power converters 5, 5-2, 5-n, the control device 14 of the electric power storage device 6, and a pneumatic brake control device (not shown).

Here, the train control device 9 detects the temperature of the electric power storage device 6 with the temperature detecting section 15, and determines a first threshold value of discharge current of the electric power storage device 6 on the basis of the temperature of the electric power storage device 6. And, when the discharge current of the electric power storage device 6 exceeds the first threshold value, the train control device 9 starts electric power generating devices that are not started among the a plurality of electric power generating devices 4, 4-2, and 4-n, so as to make the started electric power generating devices operate at a high efficiency point.

At the same time, the train control device 9 performs control of the discharge current of the electric power storage device 6 so as to make the sum of electric power of the electric power storage device 6, which electric power is obtained by discharge current of the electric power storage device 6 and voltage of the electric power storage device 6, and output power of the electric power generating devices that are started, become an electric power amount which is required for the traveling, and which is obtained on the basis of the driving command from the vehicle cab 10.

Further, when all the electric power generating devices 4, 4-2, and 4-n are operated at the high efficiency point and the discharge current of the electric power storage device 6 exceeds the first threshold value, the train control device 9 makes the a plurality of electric power generating devices 4, 4-2, and 4-n successively operate at the maximum output point.

Further, the train control device 9 determines a second threshold value of charge current of the electric power storage device 6 on the basis of the temperature of the electric power storage device 6 detected by the temperature detecting section 15. Moreover, when at least one of the electric power generating devices 4, 4-2, and 4-n is operated, and when the charge current of the electric power storage device 6 exceeds the second threshold value, the train control device 9 makes the electric power generating devices 4, 4-2, 4-n operated at the maximum output point, successively operate at the high efficiency point. Further, when all the electric power generating devices 4, 4-2, and 4-n are operated at the high efficiency point, the train control device 9 makes the electric power generating devices 4, 4-2, and 4-n successively stop.

Further, in order to start or stop the a plurality of electric power generating devices 4, 4-2, and 4-n, the train control device 9 is adapted to change the starting order of the electric power generating devices on the basis of the fuel consumption amount or the residual fuel amount of the respective electric power generating devices 4, 4-2, and 4-n.

Further, the train control device 9 detects the driving command from the vehicle cab 10 and the output power of the electric power generating devices 4, 4-2, and 4-n in response to the driving command, and thereby, determines the number of electric power generating devices 4, 4-2, and 4-n which are to be started, among the a plurality of electric power generating devices 4, 4-2, and4-n, on the basis of the operating state based on the driving command and the fuel consumption rate of the a plurality of electric power generating devices 4, 4-2, and 4-n.

Further, the train control device 9 detects the driving command from the vehicle cab 10 and the electric power amount of the electric power storage device 6, so that in the case where the electric power amount of the electric power storage device 6 that can be charged becomes zero at the time when the operating state based on the driving command is the braking state, the train controlling device 9 operates the exhaust brake.

Further, the train control device 9 detects the driving command from the vehicle cab 10 and the temperature of the electric power storage device 6 and thereby, determines the number of electric power generating devices 4, 4-2, and 4-n that are to be started among the plurality of electric power generating devices 4, 4-2, and 4-n, on the basis of the temperature at the time when the operating state based on the driving command is other than the braking state.

Further, the train control device 9 stores a history of relationship between the temperature of the electric power storage device 6 and the first threshold value or the second threshold value as a table and the like, in an internal memory. For example, each time the temperature is raised to exceed a steady operating temperature, the first threshold value or the second threshold value is reduced.

Further, the train control device 9 stores a history in which deterioration due to the total use time of the electric power storage device 6 is taken into account. For example, each time the total use time of the electric power storage device 6 is increased, the value of the first threshold value or the second threshold value is reduced.

Further, the train control device 9 updates periodically or at arbitrary timing the relationship between the temperature of the electric power storage device 6 and the first threshold value or the second threshold value. For example, when the temperature is returned to a steady operating temperature away from the history, the value of the first threshold value or the second threshold value is increased. For example, the train control device 9 performs an updating operation to a new history by a switching operation every 24 hours or every week.

Note that the electric power storage device 6 and the train control device 9 may not be mounted in the vehicle provided with the vehicle cab 10.

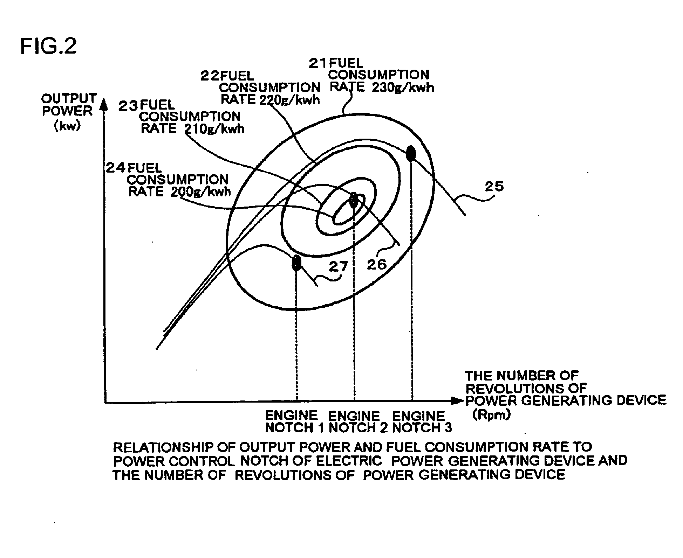

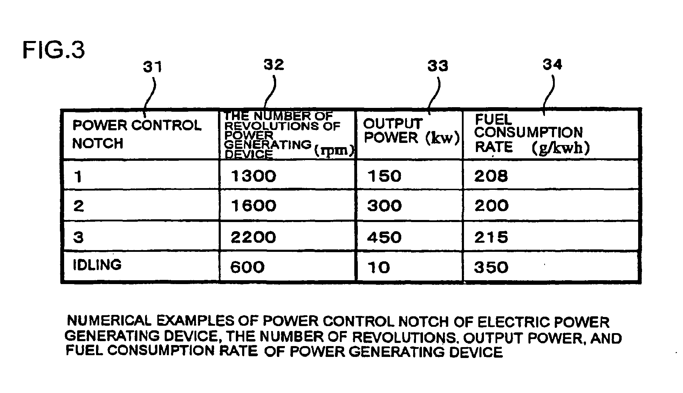

FIG. 2 and FIG. 3 show a relationship between engine power control notches of the electric power generating device 4 and the number of revolutions, output power, fuel consumption rate of the electric power generating device of the electric power generating device 4, and also show numerical examples of the relationship. FIG. 2 shows an engine characteristic which is different for each engine. In this example, when the power control notch is set to "2", as designated by reference numeral 24, the fuel consumption rate becomes a best fuel consumption rate of 200 (g/kwh), providing the moderate output characteristics shown by reference numeral 26. Hereinafter, this case is referred to as a high efficiency point. Further, when the power control notch is set to "3", the output power reaches a maximum output point, as designated by reference numeral 25. At this time, as designated by the middle part between reference numerals 21 and 22, the fuel consumption rate becomes the worst rate of 225 (g/kwh). Further, when the power control notch is set to "1", the output power is reduced to a minimum (see curve 27). At this time, as designated by reference numeral 22, the fuel consumption rate is as low as 220 (g/kwh).

There is an idle state (not shown) in which the number of revolutions of the electric power generating device is smaller than the number of revolutions in the case where the power control notch is set to "1". Four notches including the idle position are set here, but the number of positions is not limited to four, and other number of positions can be applied to the present embodiment, depending on the application.

As shown in the specific numerical examples in FIG. 3, when the power control notch 31 is set to "1", the number of revolutions of the electric power generating device is 1300 (rpm), the output power 33 is 150 (kw), and the fuel consumption rate 34 is 208 (g/kwh). When the power control notch 31 is set to "2", the number of revolutions 32 of the electric power generating device is 1600 (rpm), the output power 33 is 300 (kw), and the fuel consumption rate 34 is 200 (g/kwh). When the power control notch 31 is set to "3", the number of revolutions 32 of the electric power generating device is 2200 (rpm), the output power 33 is 450 (kw), and the fuel consumption rate 34 is 215 (g/kwh). And when the power control notch 31 is set to "idle", the number of revolutions 32 of the electric power generating device is 600 (rpm), the output power 33 is 10 (kw), and the fuel consumption rate 34 is 350 (g/kwh).

Further, the notch 1 is set as the output point at which the charged amount of the electric power storage device 6 is adjusted. Further, the point where the output power is 10 (kw), and where the number of revolutions of the electric power generating device is 600 (rpm), is set as the idle state. In the following embodiments, the two positions corresponding to the power control notch 1 and the idle state are not referred to, but in the train control device 9, these two notch positions can be arbitrarily used, depending upon the charged state of the electric power storage device 6 and the operating state of the train. For example, the stopping operation to be set in the following can be replaced by the idling operation.

In the following, the operation of vehicles constituted as described above is explained with reference to the drawings.

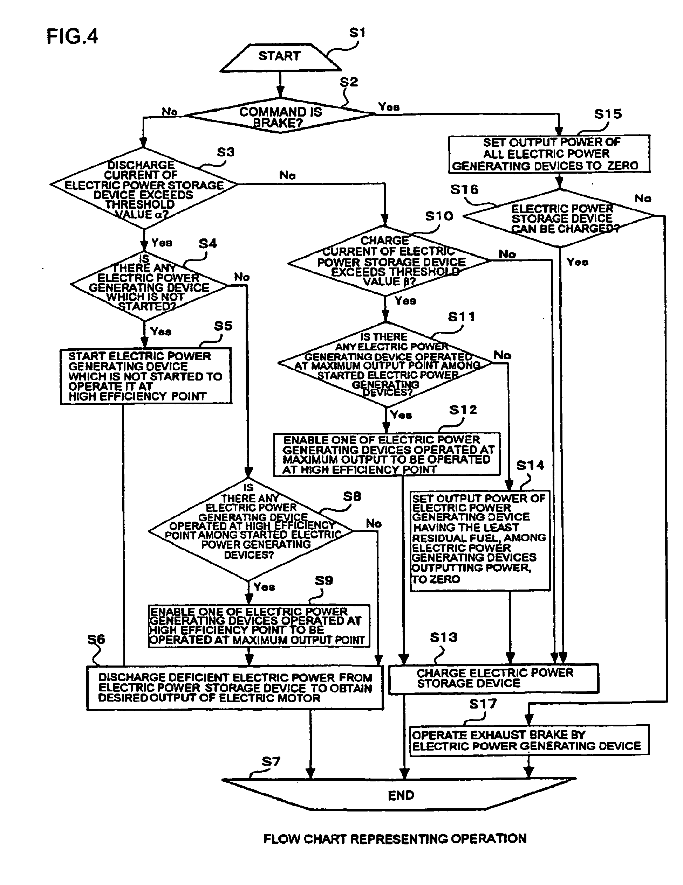

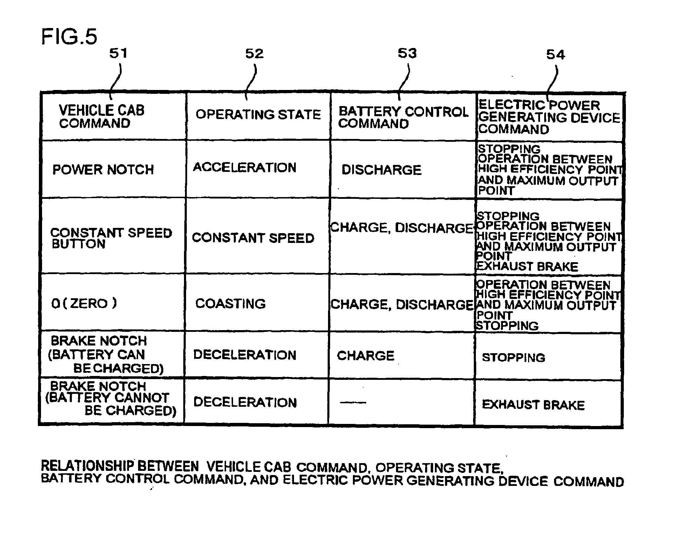

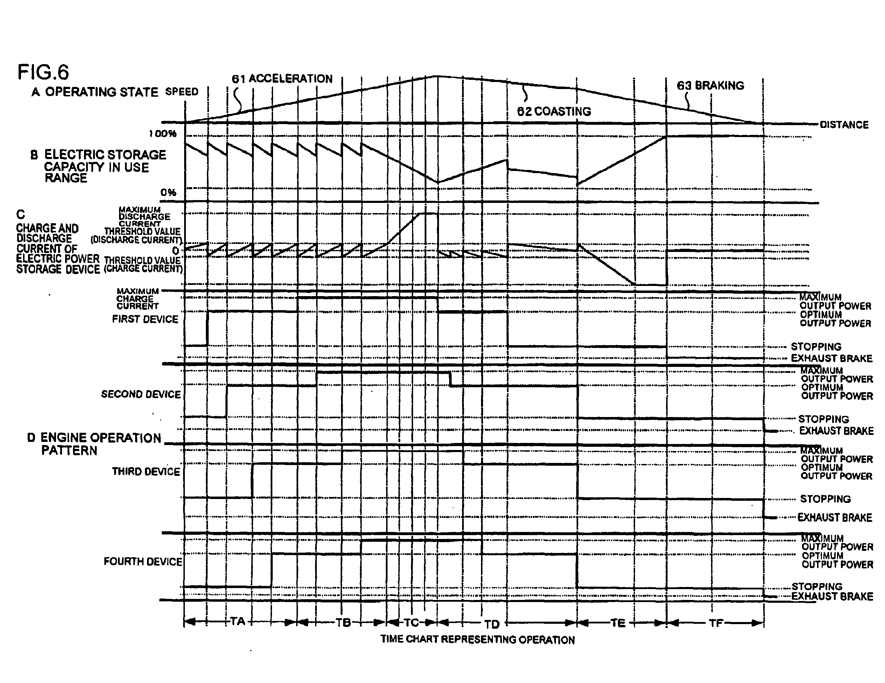

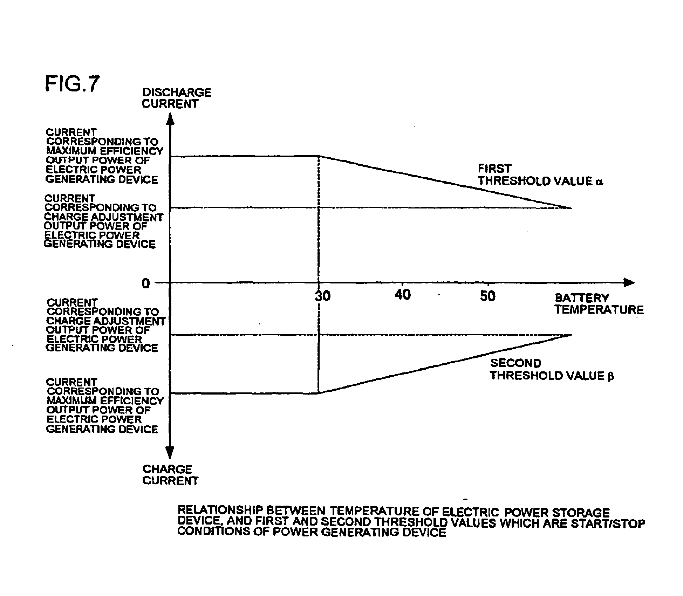

FIG. 4 is a flowchart showing an operation of the train control device 9 according to the present embodiment. FIG. 5 is a figure showing relationships between the command of the vehicle cab 10, the operating state based on the control command, the control command for the electric power storage device 6, and the control command for the electric power generating device 4. FIG. 6 is a time chart showing the operation of vehicles. FIG. 6A shows an operating state. FIG. 6B shows an electric storage capacity in use range. FIG. 6C is charge and discharge current of the electric power storage device. FIG. 6D shows an engine operation pattern. FIG. 7 is a figure showing a relationship between the temperature of the electric power storage device 6, and the first and second threshold values which are start/stop conditions of the electric power generating device.

During the periods TA, TB, and TC in FIG. 6, the operating state is the acceleration state 61, as shown in FIG. 6A. At this time, as shown in FIG. 5, the command 51 of the vehicle cab 10 is set to the power notch, the operating state 52 is set to the acceleration state, the battery control command 53 is set to the discharge state, and the electric power generating device command 54 is set to the operating state between the high efficiency point and the maximum output point. Alternatively, when the command 51 of the vehicle cab 10 is set to the constant speed button (ON state), the operating state 52 is set to the constant speed state, the battery control command 53 is set to the charge or discharge state, the electric power generating device command 54 is set to the operating state between the high efficiency point and the maximum output point, or the operating state on the flat ground or in hill climbing by using the exhaust brake.

Next, the operation of the train control device 9 is explained in detail by using the flow chart shown in FIG. 4.

After the control operation is started in step S1 in FIG. 4, whether or not the command from the vehicle cab 10 is set to the braking is judged in step S2. When the operating condition is set to the acceleration state, the command is not set to the braking, and hence, the process proceeds to step S3. In step S3, whether or not the discharge current of the electric power storage device 6 exceeds a threshold value α is judged.

Here, the threshold value α of the electric power storage device 6 is preferably determined beforehand by the temperature of the electric power storage device 6. That is, the temperature of the electric power storage device 6 before the operation of the train is started, is low in comparison with the temperature during the operation of the train. For this reason, the discharge current value should be set to be as large as possible in a range which hardly affects the life of the electric power storage device. From the viewpoint of energy saving, the discharge current value is preferably set to correspond to the energy that can be covered by one electric power generating device 4 operated at the high efficiency point.

For example, in the numerical examples shown in FIG. 3, the threshold value α at the time of steady temperature is a current value which allows the output power 33 to become 300 (kw), when the power control notch 31 is set to "2" (for example, the current value becomes 200 (A), when a secondary battery with the nominal value of 1500 (V) is used). On the other hand, in the case where as the train is continuously operated, the charge and discharge of the electric power storage device 6 progress and the battery temperature of the electric power storage device 6 is raised due to the charge and discharge loss, it is preferred that the threshold value α is gradually decreased from the initial value. For example, the threshold value α is decreased to the charged amount of the electric power storage device 6.

Referring to the numerical example in FIG. 3, when the power control notch 31 is set to "1", the threshold value α is successively lowered linearly or in stages to the current value corresponding to the output power 33 of 150 (kw) (for example, the current value becomes 100 (A) when a secondary battery with the nominal value of 1500 (V) is used). However, when the temperature of the electric power storage device 6 is lowered to the value at the time of steady temperature by a cooling apparatus, it is preferred that the threshold value α is raised to the value at the time of steady temperature once more (see FIG. 7). Note that the range of lowering the threshold value α at the time when the temperature is raised, is changed in consideration of the kind of the electric power storage device 6 and the deterioration caused by the use frequency and the use time, or the like.

In FIG. 7, when the battery temperature of the electric power storage device 6 is at a steady temperature ranging from 0 to 30 degrees, the threshold value α is set to a current value corresponding to the maximum efficiency output current of the electric power generating devices 4, 4-2, and 4-n. On the other hand, when the battery temperature of the electric power storage device 6 is raised to the temperature of 30, 40, 50, and 60 degrees, the threshold value α is successively lowered linearly or in stages so as to be set to a current value corresponding to the charge adjustment output current of the electric power generating device 4.

Next, when the discharge current of the electric power storage device 6 exceeds the threshold α in step S3, whether or not there is an electric power generating device which is not started in step S4, among the electric power generating devices 4, 4-2, and 4-n, is judged. When there is an electric power generating device which is not started, among the electric power generating devices 4, 4-2, and 4-n, the electric power generating device which is not started, is started so as to be operated at the high efficiency point in step S5. That is, the electric power generating device which is started, is operated with its power control notch set to "2".

Subsequently, in step S6, the discharge current of the electric power storage device 6 is controlled so as to make the sum of the output power amount determined by the discharge current and voltage of the electric power storage device 6 and the output power amount of the started electric power generating devices 4, 4-2, and 4-n, become the electric power amount which is required for the traveling of the train, and which is obtained on the basis of the driving command from the vehicle cab 10.

The above described processing from step S2 to step S6 is continued until all the electric power generating devices 4, 4-2, and 4-n are operated at the high efficiency point. The period TA in FIG. 6 corresponds to the processing from step S2 to step S6. For example, at the time point in which the charge and discharge current of the electric power storage device shown in FIG. 6C firstly reaches the threshold value α (discharge current) during the period TA, the first electric power generating device operated in the engine operation pattern shown in FIG. 6D is controlled to be set from the stopped state to the optimum output state (the power control notch 2).

Next, at the time point in which the charge and discharge current of the electric power storage device shown in FIG. 6C secondly reaches the threshold α (discharge current), the second electric power generating device operated in the engine operation pattern shown in FIG. 6D is controlled to be set from the stopped state to the optimum output state. Further, at the time point in which the charge and discharge current of the electric power storage device shown in FIG. 6C thirdly reaches the threshold α (discharge current), the third electric power generating device operated in the engine operation pattern shown in FIG. 6D is controlled to be set from the stopped state to the optimum output state. Further, at the time point in which the charge and discharge current of the electric power storage device shown in FIG. 6C fourthly reaches the threshold α (discharge current), the fourth electric power generating device operated in the engine operation pattern shown in FIG. 6D is controlled to be set from the stopped state to the optimum output state.

In the case where in step S3 in FIG. 4, the discharge current of the electric power storage device 6 exceeds the threshold value α, and where all the electric power generating devices 4, 4-2, and 4-n are started in step S4, the process proceeds to step S8. In step S8, whether or not an electric power generating device which is not operated at the maximum output point is present among the started electric power generating devices 4, 4-2, and 4-n, is judged. Then, in step S9, one of the electric power generating devices which are not operated at the maximum output point, among the started electric power generating devices 4, 4-2, and 4-n, is successively operated at the maximum output point (at the power control notch 3). Thereafter, the process proceeds to step S6.

The above described processing in step S3, step S4, step S8, and step S9 is continued until all the electric power generating devices 4, 4-2, and 4-n are operated at the maximum output point. The period TB shown in FIG. 6 corresponds to the processing in step S3, step S4, step S8, and step S9. For example, at the time point in which the charge and discharge current of the electric power storage device shown in FIG. 6C firstly reaches the threshold value α (discharge current) during the period TB, the first electric power generating device operated in the engine operation pattern shown in FIG. 6D is controlled to be set from the optimal output state to the maximum output state (to the power control notch 3).

Next, at the time point in which the charge and discharge current of the electric power storage device shown in FIG. 6C secondly reaches the threshold value α (discharge current), the second electric power generating device operated in the engine operation pattern shown in FIG. 6D is controlled to be set from the optimal output state to the maximum output state. Further, at the time point in which the charge and discharge current of the electric power storage device shown in FIG. 6C thirdly reaches the threshold value α (discharge current), the third electric power generating device operated in the engine operation pattern shown in FIG. 6D is controlled to be set from the optimal output state to the maximum output state. Further, at the time point in which the charge and discharge current of the electric power storage device shown in FIG. 6C fourthly reaches the threshold value α (discharge current), the fourth electric power generating device operated in the engine operation pattern shown in FIG. 6D is controlled to be set from the optimal output state to the maximum output state.

Here, in the case where all the electric power generating devices 4, 4-2, and 4-n are operated at the maximum output point, even when the discharge current of the electric power storage device 6 exceeds the threshold value α, the current is supplied from the electric power storage device 6 in order to compensate the energy which is deficient in step S6. This case corresponds to the period TC shown in FIG. 6. For example, until the time point in which the charge and discharge current of the electric power storage device shown in FIG. 6C exceeds the threshold value α (discharge current) to reach the highest discharge current, the electric storage capacity in the use range of the electric power storage device 6 in FIG. 6B is decreased so as to compensate the discharge current.

In this way, by successively starting the electric power generating devices 4, 4-2, and 4-n, the number of the electric power generating devices which are started, can be suppressed to the number corresponding to the necessary electric power amount, in comparison with the case where the electric power generating devices 4, 4-2, and the 4-n are collectively started. As a result, the fuel consumption can be improved.

Further, in the case where an electric power amount which corresponds to the output power amount determined by the discharge current and voltage of the electric power storage device 6, and which corresponds to the output power amount of one of the electric power generating devices 4, 4-2, and 4-n, is supplied, the electric power generating devices 4, 4-2, and 4-n are successively started in such a manner that the output power amount of the respective electric power generating devices is substituted for the electric power amount. This makes it possible to suppress the discharge of continuous current of the electric power storage device 6, to thereby avoid the steep output of the electric power storage device 6. As a result, it is expected that the life of the electric power storage device 6 can be extended.

Note that in step S5 and step S9, the electric power generating devices 4, 4-2, and 4-n which are to be subsequently started, or the electric power generating devices 4, 4-2, and 4-n which are to be subsequently operated at the maximum output point, are preferably determined on the basis of the fuel consumption amount and the residual fuel amount of the engine, which are grasped by the control devices 13, 13-2, 13-n of the respective electric power generating devices 4, 4-2, and 4-n. That is, among the electric power generating devices 4, 4-2, and 4-n, an electric power generating device having a smaller fuel consumption amount as compared with the other electric power generating devices is preferentially started or operated at the maximum output point. Alternatively, among the electric power generating devices 4, 4-2, and 4-n, an electric power generating device having a larger residual fuel amount is preferentially started or operated at the maximum output point, to thereby avoid the deviation of fuel consumption and heat generation between the respective electric power generating devices 4, 4-2, and4-n. As a result, it is possible to extend the life of the respective electric power generating devices 4, 4-2, and 4-n. Further, by adopting such operationmethod, it is possible to advantageouslyperform the adjustment of the period when the fuel is supplied to the respective electric power generating devices 4, 4-2, and 4-n.

Further, it is effective to determine the number of the electric power generating devices 4, 4-2, and 4-n to be started in step S5, on the basis of the operating state of the railway vehicles and the fuel consumption rate of the respective electric power generating devices. The fuel consumption rates of the respective electric power generating devices 4, 4-2, and 4-n are different from each other depending upon the operating state and the secular change of the train, and the like. Therefore, by preferentially using the electric power generating devices 4, 4-2, and 4-n having an excellent fuel consumption rate (an excellent fuel consumption), it is possible to improve the fuel consumption of the train as a whole.

During the period TD in FIG. 6, as shown in FIG. 6A, the operating state 52 becomes the coasting state as designated by reference numeral 62. In FIG. 5, this state corresponds to a case where the command 51 from the vehicle cab 10 is set to "zero", where the operating state 52 is set to the coasting state, where the battery control command 53 is set to the charge or discharge, and where the electric power generating device command 54 is set to the operation between the high efficiency point and the maximum output point, or to the stopped state.

Also, in this case, after the control operation is started in step S1 in FIG. 4, whether or not the command of the vehicle cab 10 is set to the braking, is judged in step S2. When the command of the vehicle cab 10 is set to the coasting state, the command is not set to the braking, and hence, the process proceeds to step S3. In step S3, whether or not the discharge current of the electric power storage device 6 exceeds the threshold value α, is judged. However, here, the electric power storage device 6 is in the charge state, and hence, the discharge current of the electric power storage device 6 does not exceed the threshold value α. Thus, the process proceeds to step S10.

In step S10, whether or not the charge current of the electric power storage device 6 exceeds a threshold value P due to the charging of the electric power storage device 6, is judged. When the charge current does not exceed the threshold value β, the process proceeds to step S13 where the electric power storage device 6 is charged.

When the charge current of the electric power storage device 6 exceeds the threshold value β in step S10, whether or not there is an electric power generating device operated at the maximum output point, among the started electric power generating devices 4, 4-2, and 4-n, is judged in step S11. Then, one of the electric power generating devices which are operated at the maximum output point, among the electric power generating devices 4, 4-2, and 4-n which are started in step S12, is successively operated at the high efficiency point (at the power control notch 2). Thereafter, the process proceeds to step S13.

The above described processing in step S10, step S11, and step S12 is continued until all the electric power generating devices 4, 4-2, and 4-n are operated at the high efficiency point.

When no electric power generating device is operated at the maximum output point, among the electric power generating devices 4, 4-2, and 4-n which are started in step S11, and all the electric power generating devices 4, 4-2, and 4-n are operated at the high efficiency point, the output power of the electric power generating device having the least residual fuel amount is set to zero, among the electric power generating devices 4, 4-2, and 4-n which are outputting power in step S14. Alternatively, the electric power generating devices 4, 4-2, and 4-n which are outputting power, are successively stopped (or set to be in the idle state). Thereafter, the process proceeds to step S13.

Here, as in the case of the threshold value α, the threshold value β is preferably equal to the output power of one of the electric power generating devices 4, 4-2, and 4-n at the time when the train is started (300 kw in the present embodiment (for example, 200 A is outputted when the secondary battery with the nominal voltage of 1500V is used)). During operation, the threshold value P is preferably changed in accordance with the battery temperature of the electric power storage device 6, as shown in FIG. 7. Further, as shown in step S14, it is preferred that the output power of the electric power generating device whose residual fuel amount is small is set to zero, or that the electric power generating device whose fuel consumption amount is large is preferentially stopped.

In FIG. 7, when the battery temperature of the electric power storage device 6 is in a range of steady temperature from 0 to 30 degrees, the threshold value β is the current value corresponding to the maximum efficiency output current of the electric power generating devices 4, 4-2, 4-n. On the other hand, when the battery temperature of the electric power storage device 6 is raised to 30, 40, 50 and 60 degrees, the threshold value P is the value set by making the above described current successively decreased linearly or in stages to the current corresponding to the charge adjustment output current of the electric power generating devices 4.

For example, in the state of charge and discharge current of the electric power storage device at the beginning of the period TD, as shown in FIG. 6C, the first electric power generating device operated in the engine operation pattern shown in FIG. 6D is controlled to be set from the maximum output state to the optimum output state (to the power control notch 2). Next, at the time point in which the charge and discharge current of the electric power storage device shown in FIG. 6C firstly reaches the threshold value β (charge current), the second electric power generating device operated in the engine operation pattern shown in FIG. 6D is controlled to be set from the maximum output state to the optimum output state. Further, at the time point in which the charge and discharge current of the electric power storage device shown in FIG. 6C secondly reaches the threshold value β (charge current), the third electric power generating device operated in the engine operation pattern shown in FIG. 6D is controlled to be set from the maximum output state to the optimum output state. Further, at the time point in which the charge and discharge current of the electric power storage device shown in FIG. 6C thirdly reaches the threshold value β (charge current), the fourth electric power generating device operated in the engine operation pattern shown in FIG. 6D is controlled to be set from the maximum output state to the optimum output state.

Further, at the time point in which the charge and discharge current of the electric power storage device shown in FIG. 6C fourthly reaches the threshold value β (charge current), the first electric power generating device operated in the engine operation pattern shown in FIG. 6D is controlled to be set from the optimum output state to the stopped state.

The period TE in FIG. 6 shows the case where the operating state 52 in FIG. 6A is the braking state, as designated by reference numeral 63. For this case, in FIG. 5, there is shown a case where the command 51 of the vehicle cab 10 is set to the brake notch (the state where the battery can be charged), where the operating state 52 is the deceleration state, where the battery control command 53 is set to the charge state, and where the electric power generating device command 54 is set to the stopped state. Further, the period TF in FIG. 6 also shows the case where the operating state 52 in FIG. 6A is the braking state, as designated by reference numeral 61. At this time, the command 51 of the vehicle cab 10 is set to the brake notch (the state where the battery cannot be charged), so that the operating state 52 is set to the deceleration state without the battery control command 53, and the electric power generating device command 54 is set to the exhaust brake.

Further, in FIG. 5, in addition to the case where the command 51 of the vehicle cab 10 is set to the brake notch, there is also the case of traveling on downward slope with the constant speed button set to ON state.

Next, when it is judged in step S2 that the command 51 from the vehicle cab 10 is set to the braking, (when the operating state 52 is in the braking state 63, the command is judged to be set to the breaking), the output of all the electric power generating devices 4, 4-2, and 4-n is set to be stopped (or to the idle state) in step 15. This time corresponds to the starting point of the period TE in FIG. 6. In the state of charge and discharge current of the electric power storage device at the beginning of the period TE in FIG. 6C, the second, third, fourth electric power generating devices having the engine operation pattern shown in FIG. 6D are controlled to be set from the optimum output state to the stopped state.

Then, whether or not the electric power storage device 6 can be charged is judged in step S16. In the case where the electric power storage device 6 can be charged, the excess electric power is charged into the electric power storage device 6 in step S13. During the period TE in FIG. 6, the charge and discharge current of the electric power storage device in FIG. 6C exceeds the threshold value β (charge current) to reach the maximum charge current.

In the case where the electric power storage device 6 can not be charged any more, i.e., the storage capacity of the electric power storage device 6 is fully occupied, the charging operation based on the regeneration from the electric motor 2 to the electric power storage device 6 can not be performed any more, and hence, it is necessary to generate the braking force with other means. At this time, in step S17, the exhaust brake in which the breaking force is generated by making the electric power generating devices 4, 4-2, and 4-n into the reverse jet state, is more preferentially operated than the pneumatic brake. As indicated in the period TF in FIG. 6, the exhaust brakes of the second, third, and fourth electric power generating devices 4 in the engine operation pattern shown in FIG. 6D may be successively operated, after the exhaust brake of the first electric power generating device is started, but as shown in FIG. 6, the exhaust brakes of the second, third, and fourth electric power generating devices 4 may also be simultaneously operated at the last time point of the period TF in FIG. 6.

In this way, by using the exhaust brake more preferentially than the pneumatic brake which entails the wear of brake shoes and the like, it is possible to minimize the labor required for the maintenance and the parts replacement of the train.

According to the present embodiment, it is possible to avoid any steep charge and discharge to and from the electric power storage device 6, and to extend the life of the electric power storage device 6. Further, according to the present embodiment, the effect to save the labor required for the maintenance and the parts replacement of the train, can be obtained.

Note that the present embodiment is not limited to railway vehicles, but can be applied to an automobile, and the like, when it is composed of plurality of vehicles. Further, the present embodiment is not limited to the cases, and the present embodiment can also be applied to movable bodies, such as a hull and an airplane.

## Claims

1. A series of vehicles composed of at least two or more vehicles (1, 1-2, 1-n), comprising:
a plurality of electric power generating devices (4, 4-2, 4-n) which generate electric power with fuel;
a first power converter (3, 3-2, 3-n)which converts the electric power of the electric power generating device;
an electric power storage device (6) which stores the electric power converted by the first power converter;
a second power converter (5, 5-2, 5-n) which performs mutual conversion between output power of the first power converter and/or electric power of the electric power storage device, and electric power of an electric motor (2, 2-2, 2-n) driving the vehicle;
a train control device (9) which controls the electric power generating devices and the first and second power converters; and
a vehicle cab (10) which outputs a driving command to the train control device,
the train control device (9) being adapted to detect temperature of the electric power storage device (6) for determining an allowable value of discharge current of the electric power storage device on the basis of the temperature of the electric power storage device, and
when the discharge current of the electric power storage device (6) exceeds a first threshold value determined from the temperature of the electric power storage device, to start one said electric power generating device which is not started among the plurality of electric power generating devices (4, 4-2, 4-n) for making the started electric power generating device operate at a high efficiency point, and to control the discharge current of the electric power storage device (6) to make the sum of electric power of the electric power storage device, which is obtained fromdischarge current of the electric power storage device and voltage of the electric power storage device, and output power of the started electric power generating device(s), reach a drive power which is required for traveling, and which is obtained on the basis of the driving command from the vehicle cab,
wherein the train control device is adapted to make all the electric power generating devices (4, 4-2, 4-n) operate at the high efficiency point, and when the discharge current of the electric power storage device exceeds the first threshold value, to make the plurality of electric power generating devices successively operate at a maximum output point,
wherein the train control device is adapted to detect the temperature of the electric power storage device (6) for determining an allowable value of charge current of the electric power storage device on the basis of the temperature of the electric power storage device, and
in the case where at least one of the electric power generating devices (4, 4-2, 4-n) is operated, when the charge current of the electric power storage device (6) exceeds a second threshold value determined from the temperature of the electric power storage device, to make the electric power generating devices operated at a maximum output point successively operate at the high efficiency point, and when all the electric power generating devices are operated at the high efficiency point, to make the electric power generating devices successively stop, and
wherein when the plurality of electric power generating devices (4, 4-2, 4-n) are started, the train control device is adapted to change starting order of the electric power generating devices on the basis of a fuel consumption amount or a residual fuel amount of the respective electric power generating devices.

2. A series of vehicles according to claim 1, wherein
the train control device (9) is adapted to detect the driving command from the vehicle cab (10) and the output power of the electric power generating devices (4, 4-2, 4-n) in response to the driving command, and
to determine the number of the electric power generating devices (4, 4-2, 4-n) to be started among the plurality of electric power generating devices on the basis of the operating state based on the driving command and of a fuel consumption rate of the plurality of electric power generating devices, the fuel consumption rate being based on the output power of the electric power generating devices in response to the driving command.

3. A series of vehicles according to claim 1 or 2,
wherein the train control device (9) is adapted to store a history of relationship between the temperature of the electric power storage device (6) and the first threshold value or the second threshold value.

4. A series of vehicles according to claim 3,
wherein the train control device (9) is adapted to store the history in which deterioration based on total use time of the electric power storage device (6) is taken into account.

5. A series of vehicles according to claim 3,
wherein the train control device (9) is adapted to update the relationship between the temperature of the electric power storage device (6) and the first threshold value or the second threshold value periodically or at an arbitrary timing.

## Patentansprüche

1. Reihe von Fahrzeugen, die aus mindestens zwei oder mehreren Fahrzeugen (1, 1-2, 1-n) zusammengesetzt ist, umfassend:
mehrere elektrische Stromerzeugungsgeräte (4, 4-2, 4-n), die elektrischen Strom mit Kraftstoff erzeugen;
einen ersten Stromwandler (3, 3-2, 3-n), der den elektrischen Strom des elektrischen Stromerzeugungsgeräts wandelt;
ein elektrisches Stromspeichergerät (6), das den vom ersten Stromwandler gewandelten elektrischen Strom speichert;
einen zweiten Stromwandler (5, 5-2, 5-n), der wechselseitige Wandlung zwischen ausgehendem Strom des ersten Stromwandlers und/oder elektrischem Strom des elektrischen Stromspeichergeräts und elektrischen Strom eines das Fahrzeug antreibenden elektrischen Motors (2, 2-2, 2-n) durchführt;
ein Zugsteuergerät (9), das die elektrischen Stromerzeugungsgeräte und den ersten und den zweiten Stromwandler steuert; und
eine Fahrzeugkabine (10), die eine Antriebsanweisung an das Zugsteuergerät ausgibt,
wobei das Zugsteuergerät (9) dazu ausgelegt ist, die Temperatur des elektrischen Stromspeichergeräts (6) zu detektieren, um auf der Grundlage der Temperatur des elektrischen Stromspeichergeräts einen erlaubten Wert für den Entladungsstrom des elektrischen Stromspeichergeräts zu bestimmen, und
wenn der Entladungsstrom des elektrischen Stromspeichergeräts (6) einen ersten aus der Temperatur des elektrischen Stromspeichergeräts bestimmten Schwellwert überschreitet, das eine elektrische Stromerzeugungsgerät aus den mehreren elektrischen Stromerzeugungsgeräten (4, 4-2, 4-n), das nicht gestartet wurde, zu starten, um das gestartete elektrische Stromerzeugungsgerät an einem Punkt mit hohem Wirkungsgrad zu betreiben, und den Entladungsstrom des elektrischen Stromspeichergeräts (6) so zu steuern, dass die Summe des elektrischen Stroms des elektrischen Stromerzeugungsgeräts, der aus dem Entladungsstrom des elektrischen Stromspeichergeräts und der Spannung des elektrischen Stromspeichergeräts erhalten wird, und des ausgehenden Strom des oder der elektrischen Stromerzeugungsgeräte einen Antriebsstrom erreicht, der zum Fahren erforderlich ist und der auf der Grundlage der Antriebsanweisung aus der Fahrzeugkabine erhalten wird,
wobei das Zugsteuergerät dazu ausgelegt ist, alle elektrischen Stromerzeugungsgeräte (4, 4-2, 4-n) an dem Punkt mit hohem Wirkungsgrad zu betreiben und, wenn der Entladungsstrom des elektrischen Stromspeichergeräts den ersten Schwellwert überschreitet, die mehreren elektrischen Stromerzeugungsgeräte sukzessive an einem maximalen Ausgabepunkt zu betreiben,
wobei das Zugsteuergerät dazu ausgelegt ist, die Temperatur des elektrischen Stromspeichergeräts (6) zu detektieren, um einen erlaubten Wert für den Ladungsstrom des elektrischen Stromspeichergeräts auf der Grundlage der Temperatur des elektrischen Stromspeichergeräts zu bestimmen, und
falls mindestens eines der elektrischen Stromerzeugungsgeräte (4, 4-2, 4-n) in Betrieb ist, wenn der Ladungsstrom des elektrischen Stromspeichergeräts (6) einen aus der Temperatur des elektrischen Stromspeichergeräts bestimmten zweiten Schwellwert überschreitet, die elektrischen Stromerzeugungsgeräte, die an einem maximalen Ausgabepunkt betrieben werden, sukzessive an dem Punkt hohen Wirkungsgrades zu betreiben, und, wenn alle elektrischen Stromerzeugungsgeräte an dem Punkt hohen Wirkungsgrades betrieben werden, die elektrischen Stromerzeugungsgeräte sukzessive anzuhalten, und
wobei das Zugsteuergerät, wenn die mehreren elektrischen Stromerzeugungsgeräte (4, 4-2, 4-n) gestartet werden, dazu ausgelegt ist, die Startreihenfolge der elektrischen Stromerzeugungsgeräte auf der Grundlage einer Kraftstoffverbrauchsmenge oder einer verbleibenden Kraftstoffmenge der jeweiligen elektrischen Stromerzeugungsgeräte zu ändern.

2. Reihe von Fahrzeugen nach Anspruch 1, wobei
das Zugsteuergerät (9) dazu ausgelegt ist, die Antriebsanweisung aus der Fahrzeugkabine (10) und auf die Antriebsanweisung hin den ausgehenden Strom der elektrischen Stromerzeugungsgeräte (4, 4-2, 4-n) zu detektieren, und
die Anzahl der zu startenden elektrischen Stromerzeugungsgeräte (4, 4-2, 4-n) aus den mehreren elektrischen Stromerzeugungsgeräten auf der Grundlage des Betriebszustands, der auf der Antriebsanweisung und auf einer Kraftstoffverbrauchsrate der mehreren elektrischen Stromerzeugungsgeräte basiert, zu bestimmen, wobei die Kraftstoffverbrauchsrate auf dem ausgehenden Strom der elektrischen Stromerzeugungsgeräte auf die Antriebsanweisung hin basiert.

3. Reihe von Fahrzeugen nach Anspruch 1 oder 2,
wobei das Zugsteuergerät (9) dazu ausgelegt ist, historische Daten zur Beziehung zwischen der Temperatur des elektrischen Stromspeichergeräts (6) und dem ersten oder dem zweiten Schwellwert zu speichern.

4. Reihe von Fahrzeugen nach Anspruch 3,
wobei das Zugsteuergerät (9) dazu ausgelegt ist, die historischen Daten zu speichern, bei denen Verschleiß, der auf der Gesamtverwendungszeit des elektrischen Stromspeichergeräts (6) basiert, berücksichtigt wird.

5. Reihe von Fahrzeugen nach Anspruch 3,
wobei das Zugsteuergerät (9) dazu ausgelegt ist, die Beziehung zwischen der Temperatur des elektrischen Stromspeichergeräts (6) und des ersten oder des zweiten Schwellwerts periodisch oder zu beliebigen Zeitpunkten aufzudatieren.

## Revendications

1. Série de véhicules constituée d'au moins deux ou plus de deux véhicules (1, 1-2, 1-n), comportant
: une pluralité de dispositifs de génération de courant électrique (4, 4-2, 4-n) lesquels génèrent du courant électrique à l'aide de carburant,
un premier convertisseur de courant (3, 3-2, 3-n) lequel convertit le courant électrique du dispositif de génération de courant électrique,
un dispositif de stockage de courant électrique (6) lequel emmagasine le courant électrique converti par le premier convertisseur de courant,
un second convertisseur de courant (5, 5-2, 5-n) lequel effectue une conversion mutuelle entre du courant de sortie du premier convertisseur de courant et/ou du courant électrique du dispositif de stockage de courant électrique, et du courant électrique d'un moteur électrique (2, 2-2, 2-n) entraînant le véhicule,
un dispositif de commande de train (9) lequel commande les dispositifs de génération de courant électrique et les premier et second convertisseurs de courant, et
une cabine de véhicule (10) laquelle délivre en sortie une instruction d'entraînement au dispositif de commande de train,
le dispositif de commande de train (9) étant adapté pour détecter la température du dispositif de stockage de courant électrique (6) pour déterminer une valeur permise de courant de décharge du dispositif de stockage de courant électrique sur la base de la température du dispositif de stockage de courant électrique, et
lorsque le courant de décharge du dispositif de stockage de courant électrique (6) dépasse une première valeur de seuil déterminée à partir de la température du dispositif de stockage de courant électrique, pour lancer ledit dispositif de génération de courant électrique qui n'est pas lancé parmi la pluralité de dispositifs de génération de courant électrique (4, 4-2, 4-n) afin d'amener le dispositif de génération de courant électrique lancé à fonctionner à un point d'efficacité élevé, et pour commander le courant de décharge du dispositif de stockage de courant électrique (6) pour amener la somme du courant électrique du dispositif de stockage de courant électrique, laquelle est obtenue à partir du courant de décharge du dispositif de stockage de courant électrique et de la tension du dispositif de stockage de courant électrique, et du courant de sortie du ou des dispositifs de génération de courant électrique, à atteindre un courant d'entraînement qui est requis en vue du déplacement, et qui est obtenu sur la base de l'instruction d'entraînement en provenance de la cabine de véhicule,
le dispositif de commande de train étant adapté pour amener tous les dispositifs de génération de courant électrique (4, 4-2, 4-n) à fonctionner au point d'efficacité élevée, et lorsque le courant de décharge du dispositif de stockage de courant électrique dépasse la première valeur de seuil, pour amener la pluralité de dispositifs de génération de courant électrique à fonctionner successivement à un point de sortie maximum,
le dispositif de commande de train étant adapté pour détecter la température du dispositif de stockage de courant électrique (6) afin de déterminer une valeur permise de courant de charge du dispositif de stockage de courant électrique sur la base de la température du dispositif de stockage de courant électrique, et
dans le cas où au moins l'un des dispositifs de génération de courant électrique (4, 4-2, 4-n) est mis en fonctionnement, lorsque le courant de charge du dispositif de stockage de courant électrique (6) dépasse une seconde valeur de seuil déterminée à partir de la température du dispositif de stockage de courant électrique, pour amener les dispositifs de génération de courant électrique fonctionnant à un point de sortie maximum à fonctionner successivement au point d'efficacité élevé, et lorsque tous les dispositifs de génération de courant électrique fonctionnent au point d'efficacité élevée, pour amener les dispositifs de génération de courant électrique à s'arrêter successivement, et
lorsque la pluralité de dispositifs de génération de courant électrique (4, 4-2, 4-n) sont lancés, le dispositif de commande de train est adapté pour changer l'ordre de lancement des dispositifs de génération de courant électrique sur la base d'une quantité de consommation de carburant ou d'une quantité de carburant résiduelle des dispositifs de génération de courant électrique respectifs.

2. Série de véhicules selon la revendication 1, dans laquelle le dispositif de commande de train (9) est adapté pour détecter l'instruction d'entraînement en provenance de la cabine de véhicule (10) et le courant de sortie des dispositifs de génération de courant électrique (4, 4-2, 4-n) en réponse à l'instruction d'entraînement, et
pour déterminer le nombre des dispositifs de génération de courant électrique (4, 4-2, 4-n) à lancer parmi la pluralité de dispositifs de génération de courant électrique sur la base de l'état opérationnel basé sur l'instruction d'entraînement et d'un taux de consommation de carburant de la pluralité de dispositifs de génération de courant électrique, le taux de consommation de carburant étant basé sur le courant de sortie des dispositifs de génération de courant électrique en réponse à l'instruction d'entraînement.

3. Série de véhicules selon la revendication 1 ou 2,
dans laquelle le dispositif de commande de train (9) est adapté pour mémoriser un historique de relation entre la température du dispositif de stockage de courant électrique (6) et la première valeur de seuil ou la seconde valeur de seuil.

4. Série de véhicules selon la revendication 3,
dans laquelle le dispositif de commande de train (9) est adapté pour mémoriser l'historique dans lequel une détérioration basée sur le temps d'utilisation total du dispositif de stockage de courant électrique (6) est prise en compte.

5. Série de véhicules selon la revendication 3,
dans laquelle le dispositif de commande de train (9) est adapté pour mettre à jour la relation entre la température du dispositif de stockage de courant électrique (6) et la première valeur de seuil ou la seconde valeur de seuil périodiquement ou selon un rythme arbitraire.
